(19) Europäisches Patentamt / European Patent Office / Office européen des brevets

(11) **EP 1 668 843 B1**

(12) **EUROPEAN PATENT SPECIFICATION**

(45) Date of publication and mention
of the grant of the patent:
**09.01.2013 Bulletin 2013/02**

(21) Application number: **04768372.7**

(22) Date of filing: **08.09.2004**

(51) Int Cl.:
***H04L 12/70*** *(2013.01)*

(86) International application number:
**PCT/GB2004/003825**

(87) International publication number:
**WO 2005/032068 (07.04.2005 Gazette 2005/14)**

(54) **BANDWIDTH ALLOCATION**

BANDBREITENZUTEILUNG

AFFECTATION DE LARGEUR DE BANDE

(84) Designated Contracting States:
**AT BE BG CH CY CZ DE DK EE ES FI FR GB GR
HU IE IT LI LU MC NL PL PT RO SE SI SK TR**

(30) Priority: **29.09.2003 GB 0322770**

(43) Date of publication of application:
**14.06.2006 Bulletin 2006/24**

(73) Proprietor: **BRITISH TELECOMMUNICATIONS
public limited company
London
EC1A 7AJ (GB)**

(72) Inventor: **Saffre, Fabrice Tristan Pierre
Kesgrave Suffolk IP5 2EQ (GB)**

(74) Representative: **Lidbetter, Timothy Guy Edwin et
al
British Telecommunications plc
Intellectual Property Department
PPC5A, BT Centre
81 Newgate Street
London EC1A 7AJ (GB)**

(56) References cited:
**EP-A- 1 045 555     US-A1- 2001 033 557**

## Description

This invention relates to the allocation of bandwidth to users of a telecommunications network, in particular for providing access to a distributed network such as the "internet".

With the introduction of broadband connectivity to an increasing number of end users, bandwidth was initially treated as an inexhaustible commodity. Users typically paid a fixed price for connectivity, with no restrictions on usage. The rapid development of "bandwidth-hungry" applications (and more particularly peer to peer file sharing) has subsequently led to resource management problems, and impairment of quality of service, experienced either as a reduction in speed, or failure of some connections altogether. Maintenance of quality of service is proving increasingly difficult in the face of the demands of too many subscribers consuming too much bandwidth for the current economically viable contention ratios. The contention ratio is the ratio $b_{max} N_{tot}/ B$ between the total bandwidth that would be required for all $N_{tot}$ users to use the maximum capability $b_{max}$ of their connection, and the total bandwidth B that can be carried by the system. Note that most users, most of the time, are using far less than the maximum capability. A typical contention ratio lies between values of 20 and 50, consistent with the average user making use of only between 2% and 5% of the full capacity $b_{max}$ whilst on line.

In this specification the term $N_{tot}$ is used for the number of users to whom the service is potentially available, whether currently on line or not, and "N" will be used for the number of users currently on line. Contention rations are conventionally calculated on the former figure.

The main problem faced by Internet service providers (ISP) is one example of a well documented problem that has been studied for several decades under the name "Tragedy of the Commons" (see e.g. the original 1968 paper by G. Hardin in "Science", 162(1968): 1243-1248. In short, it considers an exploitation model whereby the benefits of increasing consumption of a shared resource accrue only to the user, but the negative effects in terms of its progressive depletion as a consequence of such consumption are evenly distributed amongst all the sharers of the resource. Such a model is shown to be intrinsically unstable and ultimately self-defeating, except in the special case where the shared resource is inexhaustible, in which case there is no depletion of the resource. Unfortunately, there have been many situations where this special case has been assumed to apply, with the result that unlimited access to a resource has been permitted on the basis that the impact of exploitation appeared to be so small that it could be considered negligible. Problems are then encountered if the scale of utilisation then increases to a point where the effect is no longer negligible. This is precisely what happened with broadband. With no limitations on usage, new applications of the internet have been developed that require the downloading of huge amounts of data. This increase in traffic per user will result in reductions in quality of service unless contention ratios can be reduced. However, on the contrary, the number of users on line at any one time has increased, increasing the effective contention ratio $b_{max}N/B$, (where N is the number of users currently on line) . Before home users started to sign up "en masse", which of course was the objective, the capacity of the network appeared infinite compared to the impact the individual users would have in terms of bandwidth consumption. As a result, Internet Service Providers (ISPs) based their promotion campaigns on the idea that they could in all impunity promise unfettered access to all would-be customers. Broadband enthusiasts simply started enjoying the comfort of being "online" 24 hours a day, 7 days a week. This increase in demand is approaching the point where the use of network resources has now become anything but negligible and led to significant reductions in quality of service, as the finite capacity of the underlying communications network starts to be approached.

In short, overexploitation by an individual user produces benefits only to that user, while the adverse consequences of such overexploitation, such as low connection speed, are experienced over the entire customer base. Extravagant use is rewarded and moderation is not, leaving all subscribers with the choice of ceasing to use a service that doesn't fulfil its promises, or increase their share of the rapidly shrinking broadband resource by becoming compulsive bandwidth consumers themselves.

Individual ISPs have addressed this problem in several different ways. Some have introduced a limit to the service provided, by imposing a limit on usage in a given period, combined with a variety of pay-per-use schemes for users who wish to exceed that limit. These are effectively breaking their initial promise of unrestricted access (originally the backbone of the publicity with which they attracted the subscribers in the first place), thereby risking alienation of their customer base. Other ISPs have allowed the quality of service to fall, resulting in slow or failed connections, again alienating their customers. Other ISPs, choosing to honour their pledge of "unlimited access", are forced to install more network capacity to maintain tolerable quality of service overall. Such an approach may not be commercially viable, and may in any case achieve no obvious benefit, as the extra bandwidth will be rapidly drained by the same heavy users who caused the problem in the first place. Moreover, since these services are generally paid for by a subscription, the cost of any increase in network capacity can only be funded by attracting more users, not by encouraging additional usage by existing customers. Of course, this is a simplified view and most ISPs are actually combining these strategies in an uphill struggle to escape the trap they laid down for themselves.

Any practical solution has to involve controlling resource consumption by individual subscribers, by introducing changes in the service that would not be perceived by the majority of end users as a loss of the unrestricted access and excellent quality of service they currently enjoy for a fixed monthly fee.

One system, proposed in European Patent Specification EP1045555, allocates resources in proportion to the predicted requirements of the users. However, this system relies on the users accurately predicting their intended or forecast use, and also rewards heavy users, (or those which claim to be heavy users), with the most capacity. For reasons already discussed, a solution to overloading of capacity which impinges more on heavy users than on light ones is sought. This requires a reliable method of reducing the connection speed of the high bandwidth users who are causing the problem, whilst not penalising the moderate user.

It has been proposed to prioritise traffic, by penalising some bandwidth-hungry application types. However, this requires the network to be capable of identifying such applications, and would necessarily have to be reactive as ingenious heavy users devise new applications to circumvent any such restrictions. Another proposal is to throttle effective connection speed on the basis of current network state (normal/congested), thereby rationing bandwidth at times of high demand and encouraging users to choose off peak times to access the internet.

Yet another proposal is to accord individual "privileges", such as a standard class and a premium class of membership. However, it is not possible, even if it were desirable, to discriminate between a "good" and a "bad" subscriber at the time when they sign up for the service. Indeed, a "moderate" customer may become a "heavy user" as he discovers the potential of the service, or may change usage patterns over time as interests change, or as the people who have access to the service come and go. For example, in a domestic situation, the subscription may see heavy use only when a particular family member with a liking for downloading popular music videos is visiting. Similarly, seasonal fluctuations in usage may be experienced by a subscription that is used for streaming coverage of sporting events, as there will be less usage during the close season.

United States patent 6473793 (Dillon) and United States Patent application US2001/0033557 (Amaltitano) both suggest the use of dynamic allocation of bandwidth by limiting or "throttling" the bandwidth available to users with a history of heavy usage. Whilst this has the effect of constraining the heavy users, they do not make optimal use of the available resources as the limitation is imposed regardless of whether any lighter users currently require capacity.

The present invention addresses this by providing a method of controlling access to a communications resource in which the maximum capacity made available to each of a plurality of users bears an inverse relationship to the usage of the resource made by that user over a previous period:

characterised in that the total available capacity is shared between the users currently requiring capacity, according to previous usage made by each of the users currently requiring capacity relative to the previous usage made by the other users currently requiring capacity.

Preferably the method comprises the steps of:

- measuring the usage of the resource made by each user over a predetermined period,
- ranking the users according to the measured usage
- restricting the availability of resource to each user currently requiring capacity by allocating a restriction factor to each user according to that user's ranking

The user's maximum connection speed is reduced to a value determined by the restriction factor. In a preferred embodiment, the ratio between the restriction factors allocated to adjacently ranked users is constant over all users currently requiring capacity. Provided that the maximum available to any given user is less than the total bandwidth the restriction factor allocated to the user having made the least usage over the previous period is preferably unity, so that user experiences no impairment.

The invention extends to an apparatus for controlling access to a communications resource having means for performing the operations specified above. This may be embodied in any suitable part of the network in which access may be controlled, such as at in the modem associated with the internet service provider's server, or at some intermediate point in the network.

The invention therefore computes priorities between the current users, instead of comparing individual usage to a predetermined allowance or an agreed limit on the transfer rate. It takes into account users' longer-term histories, but also spontaneously adjusts not only to unpredictable fluctuations in traffic demand but also to changes in network characteristics, such as modification to the contention ratio as capacity varies. This solution is intrinsically more adaptive than the prior art proposals.

The invention therefore allows the allocation of priorities to subscribers in real time, as a function of their individual histories of bandwidth consumption, and of the current overall demand. As a result the interests of ISPs and broadband users can be reconciled by tuning individual connection speed so as to encourage desirable behaviour while simultaneously taking into account changing network load. In other words, quality of service is used as a commodity, which can be distributed as a reward. Users would accept that a reduction in quality of service can be attributable to general overload: the key exception with this invention is that that such a reduction would not be homogeneously distributed, but the heaviest users would suffer more for the consequences of that heavy use.

An embodiment of the invention will now be described, by way of example, with reference to the drawings, in which

Figure 1 is a schematic diagram illustrating the access network connecting users to the internet

Figure 2 is a schematic diagram showing the functional elements that co-operate in the embodiment,

Figure 3 is a flow chart showing the principal steps of the operation of the embodiment:

Figures 4 to 9 show the results of a simulation of the use of the invention, and comparative results for a prior art system. More specifically:

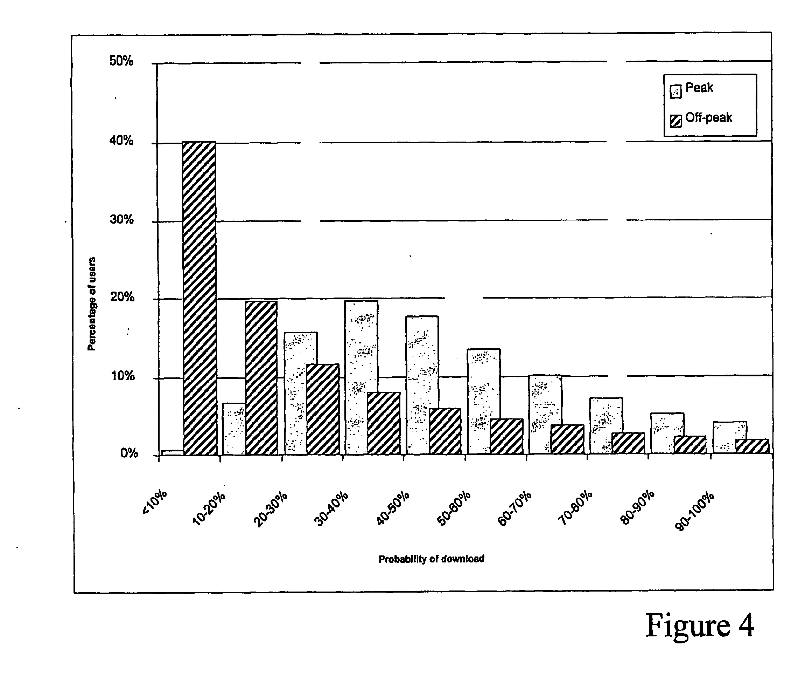

Figure 4 shows a distribution of broadband usage used in the simulation.

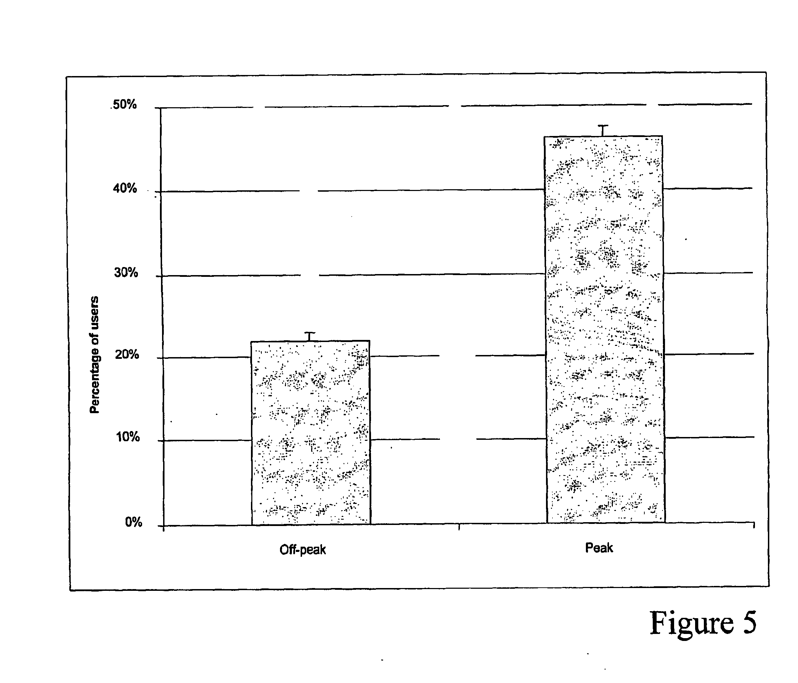

Figure 5 shows the variation in usage between "peak" and "off-peak" time.

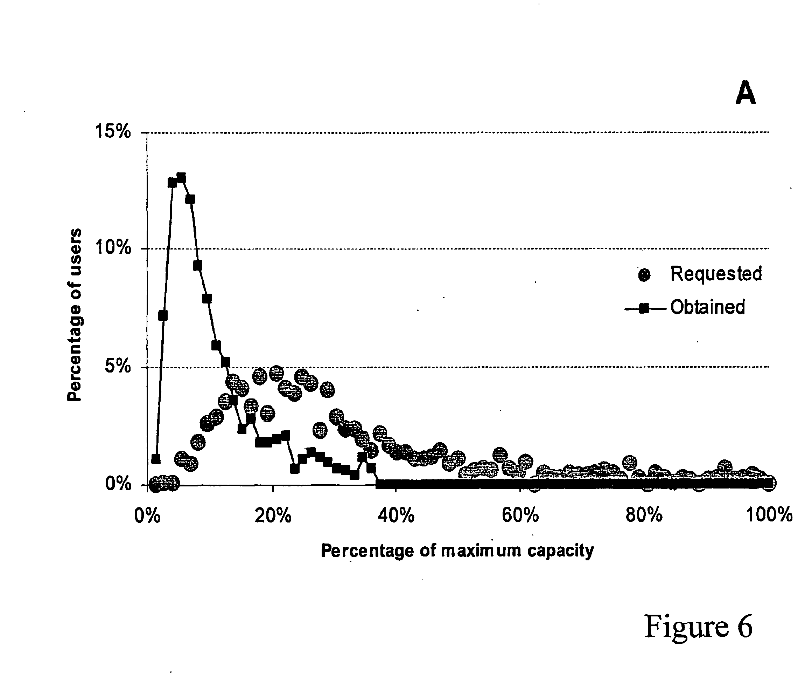

Figure 6 shows a Frequency distribution of users as a function of how much capacity they require and obtain, in a prior art system,

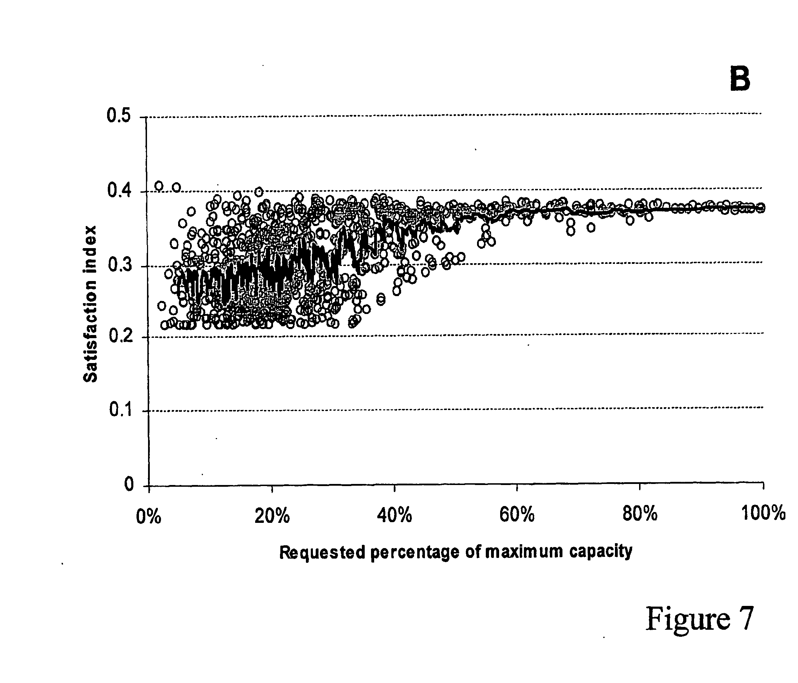

Figure 7 shows a correlation between requested capacity and overall satisfaction index in the prior art system,.

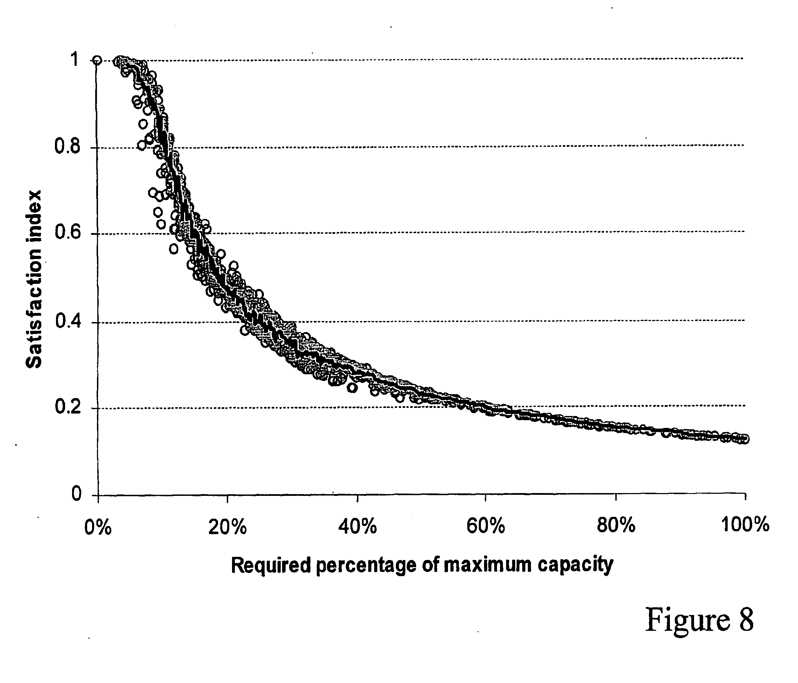

Figure 8 shows the correlation between requested capacity and overall satisfaction in a system according to the invention.

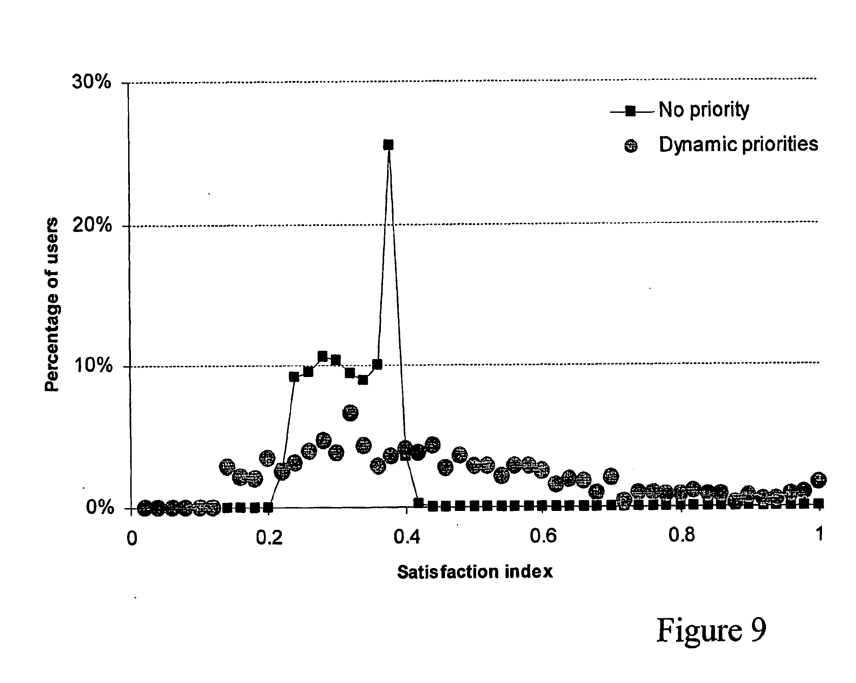

Figure 9 shows a Frequency distribution of subscribers as a function of their satisfaction index, for both the prior art system and the system according to the invention.

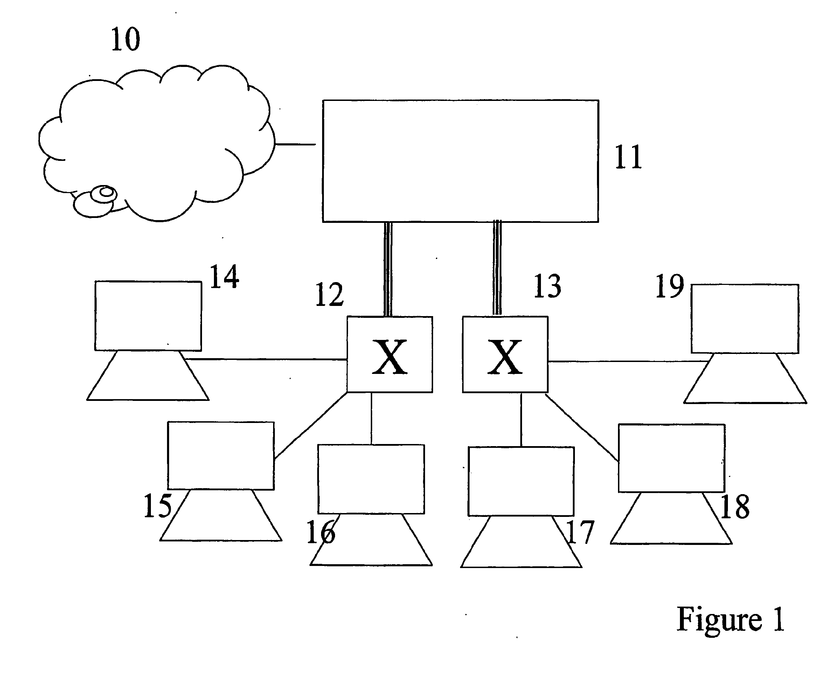

Figure 1 illustrates in schematic form the access network connecting users 14, 15, 16, 17, 18, 19 to the internet 10. Users are generally connected by a switching system 1 2, 13 of some kind to a server 11 which processes data and data requests transmitted by the users and receives data intended for the users for forwarding to them. The connections between the users 14, 15, 16, 17, 18, 19 and the switching systems 12, 13 may be by any suitable means, such as dedicated data links, telephone circuits, packet switching systems and the like, the nature of which may limit the speed at which data can be transferred. The capacity of the switching system itself 12, 13, the server 11, and any communications links between them, is shared between a group of users, and in general is greater than any one user is likely to require but less than the total that would be required if all users were to attempt to access the server 11 simultaneously at maximum bandwidth.

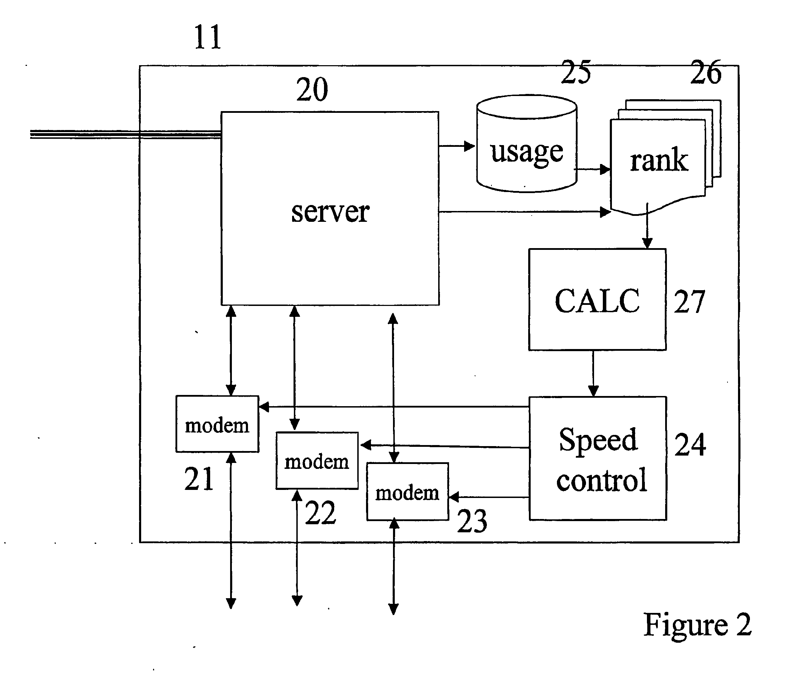

Figure 2 is a schematic diagram showing the functional elements that combine to perform the invention. These elements are typically embodied in software running on a computer in the server 11 as shown, or in the exchange 12,13, or some other point where capacity is limited. It would be possible to run the process according to the invention in tandem, at more than one point 11, 12 in the network, if capacity constraints exhibit themselves at more than one point in the network, For example, the aggregate values of maximum bandwidth available to the switches 12, 13, may be greater than the bandwidth available to the server 11. In such a case both switches may still be offering more traffic to the server 11 than it can handle, despite rationing bandwidth according to their own constraints.

The main functionality 20 of the server 11 is accessed through a series of modems 21,22,23, each interfacing with an individual user terminal such as 14, 16, 18 (Figure 1). These modems are not necessarily permanently dedicated to individual terminals, but are allocated as and when such'a terminal is in use. The speed of operation of each modem 21, 22, 23 is controlled by a bandwidth control unit 24.

A store 25 is provided for recording the amount of bandwidth each user has consumed over a predetermined measurement period. The identities of those users currently connected, are stored in a register 26, where they are sorted according to the usage data retrieved from the store 25. A processing unit 27 is provided, which has access to the stored data and provides data to operate the bandwidth control unit 24.

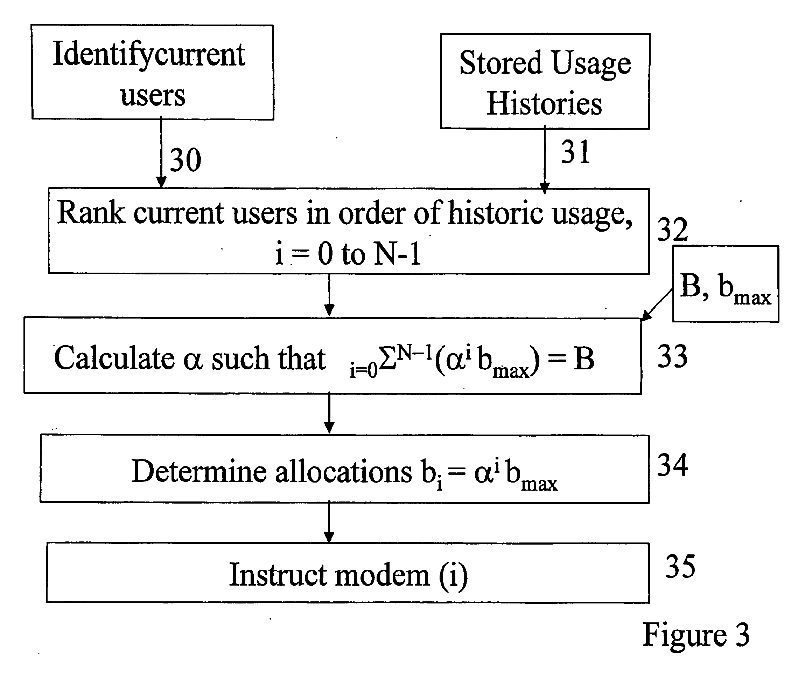

The operation of this embodiment will now be described with reference to Figure 3. Subscribers to the service are allocated to groups that are collectively allocated a given amount of bandwidth. The group could be defined as including all subscribers to a given service, but more typically they would be a subset defined by a resource they all share, typically an element of the network such as a cable or a server. Figures 2 and 3 show the operation of the embodiment for the members of one such group.

The server 20 identifies all users in the defined group who are online at any given time and stores their identities in the register 26 (step 30). The register retrieves the usage data for these users from the store 25 (step 31) and attributes each user a priority (step 32) on the basis of that data. In the present embodiment this priority is based on a simple inverse function of the amount of bandwidth that they have consumed over a given period, selected to be sufficiently short to respond promptly to changes in behaviour without reacting to every individual download. The period used in the simulations discussed below was 24 hours.

The users are ranked in order of priority (step 32), and each is allocated a priority index $i$, the highest priority, allocated to the user with the lowest usage record, being zero.

A value $\alpha$ is then determined by the processor 27 (step 33). This is a value in the range $0 < \alpha \leq 1$, which is a function of the number of active users N, the bandwidth $b_{max}$ to be made available to the highest priority user, and the total bandwidth B available to the group, and is selected such that: $$B = \sum_{i=0}^{N-1} b_i \,, \text{ where } b_i = \alpha^i$$

$b_{max}$. This can be done using a binary search to find a value for $\alpha$ (always comprised between zero and one) for which the sum over all values $b_i = \alpha \, b_{i-1}$ does not

exceed the available capacity B. In normal circumstances the value $b_{max}$ is fixed. The value B depends on the current capacity of the network, which may vary with temporary or permanent changes to the network infrastructure, but may be taken as fixed for present purposes.

Each active connection is allocated a given share $b_i = a^i b_{max}$ of the total bandwidth B available to the group (step 34), and the respective modem 21, 22, 23 through which the user is connected is controlled to limit its operating speed to the allocated bandwidth $b_l$ (step 35).

It can be seen that, across the entire population at any given time, the ratio between the bandwidths $b_i$, $b_{i+1}$ made available to any pair of users having adjacent rankings $i$, $i+1$ is therefore $b_{i+1} / b_i = \alpha^{i+1} b_{max} / \alpha^i b_{max} = \alpha$, which depends only on the number of group members online $N$.

It will also be noted that, since $\alpha^0 = 1$ for any value of $\alpha$, the user who is awarded the highest priority (index $i$=0) always experiences the fastest possible connection speed: that is to say $b_o = b_{max}$, If, at very quiet times, the contention ratio falls to less than unity (i.e. $Nb_{max} < B$), the value $\alpha$ takes its maximum value of 1, so all values of $b_i = 1^i b_{max} = b_{max}$, and all users currently on line can be allocated the maximum bandwidth $b_{max}$.

This combination of rules adapts individual connection speeds so as to find a suitable balance between the will to reward moderate users and the necessity to take into account variations in the overall demand (proportional to $N$). Indeed, in this model, the impact of overexploitation is absorbed by those group members who are responsible for it, simply through the reduction of their priority. In effect, everybody could still pay a fixed monthly fee, but the effects of overload would be heterogeneously distributed, with major bandwidth consumers forced to give way to "moderate" users when the latter choose to go online.

This solution bypasses the "pay-per-use" pricing scheme completely and simultaneously offers a way of protecting ISPs' interests by eliminating the need for buying increasingly more bandwidth to keep up with the demand. It allows for much finer network capacity management without the need for major, probably PR-damaging changes to the broadband offering.

A series of simulated experiments have been performed in order to test the model and obtain quantitative data about how applying it would affect network operations. Special emphasis was put on measuring the QoS experienced by the end user and evaluating how it would translate into positive/negative changes to a global "satisfaction index". Results are compared to the situation that would arise from an identical load if not using dynamic priorities (i.e. homogeneous distribution of congestion effects).

Even though the simulation is based on a simplified scenario that falls a long way short of taking into account the complexity of activity patterns, several details have been included so as to increase overall realism. At present, every 24h cycle is divided into "peak" and "off-peak" time. As the objective is to model home usage, the period running from 00:00 to 16:00 is considered "off-peak", with the maximum load being expected between 16:00 and midnight. Every user is attributed a fixed probability of drawing upon the shared bandwidth (i.e. attempting to download) during "peak" and "off-peak" period. Each probability is pseudo-randomly generated so as to produce a plausible continuous distribution of profiles, from the occasional user to the compulsive bandwidth consumer whose connection is in a permanent "download state". Figure 4 shows the frequency distribution of simulated subscribers as a function of their probability to be engaged in an activity generating heavy traffic, respectively at "peak" and "off-peak" times. The model currently assumes a low contention ratio of 10:1, meaning that up to 10% of all users can be using their connection at maximum speed simultaneously before congestion problems arise. This generous hypothesis (real contention ratios are typically between 20 and 50:1) is counterbalanced by the fact that average network usage is also unusually high. Indeed, parameter values result in an average ~46% of all subscribers attempting to download simultaneously at "peak" time and ~22% "off-peak" (see Figuse 5). This "double exaggeration" is intentional and is meant to anticipate the future situation where highspeed connections have become so ubiquitous that applications like video streaming are commonly used in everyday home activities. However, it does not reduce the applicability of the model to other, more contemporary scenarios, provided that an increase of the contention ratio is accompanied by a decrease in average usage.

Every day is divided into 288 periods of 5 min each, which means that, to be consistent with simulation results, any practical implementation would require priorities (and the resulting connection speed) to be updated at the same rate. The user's "satisfaction index" is defined as the ratio between *effective* and *expected* QoS, averaged over one daily cycle. Basically, if every time that user $i$ is attempting to download, connection speed is maximum ($b_i/b_{max} = 1$), his/her overall satisfaction index is 1. It is important to understand that this measurement does take into account the fact that the speed of the connection during periods when the subscriber is *not* actively using it are not included in the calculation. For example, high "off-peak" QoS is only perceived by those users who are also actually downloading "off-peak", so it should only increase the satisfaction index of the corresponding subset of the population.

The very low variability shown in Figure 5 (in which the error bars indicate the standard deviation) comes from the small size of the simulated population (1000 users) and from the crude modelling of daily fluctuations (sharp transition between "peak" and "off-peak").

From figure 5, it is apparent that even during the "off-peak" period, the demand is about double the offer (~22% users are attempting to download, for a contention ratio of 10:1). So it is clearly impossible to satisfy all users if they expect their connection to operate at maximum speed, especially considering that the population engaged in some kind of bandwidth-consuming activity more than doubles at "peak°" time (for the chosen parameter values). The result is that there is an incompressible difference *in total* between the needed/requested and available/attributable capacity, which in turn means that customers necessarily obtain less bandwidth than they have requested (see Figure 6).

Figures 6 and 7 illustrate the frequency distribution of users as a function of how much capacity they require and effectively obtain over a 24h period (Figure 6) and correlation between requested capacity and overall satisfaction index (average QoS experienced over 24h, Figure 7). Simulation assumes equal distribution of saturation effects over all users online simultaneously (no priorities).

The real problem however is that, as long as dynamic priorities are not applied, overexploitation affects all users who are simultaneously drawing upon the resource in exactly the same way, independently of their history or profile. The unwelcome consequence is that more demanding users ultimately experience better QoS (higher satisfaction index) than the "moderate" bandwidth consumers. This is simply because the "hungry" subscribers benefit the most from the relatively low "off-peak" congestion levels: indeed, they are the ones who are downloading data 24 hours a day. On the contrary, the occasional user who manually navigates the web and uses video conferencing to make a few phone calls is typically using the service at "peak" time, when the network is also being used by other "moderate" consumers, as well as the heavy "always on" users. This generates the entirely wrong correlation between usage and satisfaction index from the ISP's point of view, with the most desirable customers having the worst experience and vice versa (see Figure 7). In short: everybody suffers all the time, but "good" broadband subscribers more than others.

The problem is even worse if the distribution of user profiles is such that the majority belongs to the "moderate" kind (which is usually the case, even though the implacable logic of the "Tragedy of the Commons" makes it an intrinsically unstable, and therefore temporary, situation). Then not only are the compulsive bandwidth consumers the most satisfied (and the least likely to leave or refrain themselves), they are also a minority. Clearly, in a fixed pricing model, this cannot fail to be fatal to the provider, who involuntarily sacrifices the interest of the majority of its customers for the sole benefit of improving the experience of a small number of abusive users.

If using dynamic relative priorities, (calculated on the basis of the rank and equations described above), everything changes completely. Of course, since the offer and demand remain the same, it is still impossible to keep everybody happy all the time. However, by distributing QoS as a reward for good behaviour, ISPs can effectively gua rantee that the "moderate" users have a more positive experience than their "hungry" relatives: the correlation between usage and satisfaction index is reversed, as shown on Figure 8, which shows the correlation between requested capacity and overall satisfaction index when dynamic priorities are used to tie individual connection speed to the user's history (total effective bandwidth consumption), as recorded over the last 24 hours.

Even better, the average satisfaction index is also increased from ~0.31 to ~0.44, as can be inferred from comparing the frequency distributions shown on Figure 9, which shows the frequency distribution of subscribers as a function of their satisfaction index, for both scenarios. The "flatter" profile when applying the dynamic priorities model results from the strong inverse correlation between usage and average satisfaction. This may appear paradoxical considering that the amount of resources is the same as in the previous scenario, and so too is the overall demand. It is easily understood though if remembering that the heavy bandwidth consumers are a minority, while taking into account the fact that, as far as average satisfaction is concerned, all customers have the same weight (every subscriber is worth 1 point). So by indirectly penalising the download maniac in favour of the "moderate" user, ISPs would actually generate more happy than unhappy customers. In short, simulation results demonstrate that QoS can be increased, "network friendly" users encouraged and compulsive bandwidth consumers neutralised without the pain of switching to a pay-per-use pricing model.

Finally it should be emphasised that in no way is the "hungry" user explicitly or permanently discriminated against and that the dynamic priorities model described here has no long-term memory. Nothing prevents a subscriber wishing to download large amounts of data from doing so during "off-peak" periods. Indeed, his/her connection speed is not irreversibly reduced and priority is only relative: when "moderate" users are not using the service, even the most bandwidth-consuming customer can experience excellent QoS. The user is only prevented from being a nuisance to other subscribers and a change in habits will be rewarded by an improved ranking within the timescale over which usage history is recorded: 24 hours in the examples given above.

## Claims

1. A method of controlling access (21, 22, 23) to a communications resource (10) in which the prioritisation of access made available to each of a plurality of users (14, 15, 16, 17, 18) bears an inverse relation to that user's recorded previous usage and in which, for each user of the system, the usage of the resource by that user over a predetermined period is recorded, and

**characterised in that** the total available capacity (B) of the resource is determined, and the total capacity is shared between only the users currently requiring access such that each user currently requiring access is allocated a share $b_i$ of the total available capacity (34), the respective shares being selected (33) such the total capacity allocated does not exceed the total available capacity.

2. A method according to claim 1, comprising the steps of

   - measuring the usage (31) of the resource made by each user,
   - ranking the users according to the measured usage over a predetermined prior period (32)
   - restricting the availability of resource to each user currently requiring access by applying (33) a restriction factor ($b_i$) to each user according to that user's ranking

3. A method according to claim 2, in which the restriction factors ($b_i$ , $b_{i+1}$) allocated to adjacently ranked users differ by a ratio a which is constant over all users currently requiring access

4. A method according to claim 2 or claim 3, in which the restriction factor ($b_{max}$) allocated to the user currently requiring capacity having made the least usage over the previous period is unity.

5. Apparatus for controlling access to a communications resource (10) having means (24-27) for prioritisation of access to resources available to each of a plurality of users (14, 15, 16, 17, 18, 19) in an inverse relation to that user's recorded previous usage (32),, having means (25) for recording usage of the resource made by each user over a previous period:

   **characterised in that** an allocation means (24-27) **has means for determining** the total available capacity (B), **and means (26, 27) for allocating, to each** user currently requiring access, a proportion $b_i$ of the total available capacity (34), the shares being selected such that the total of the capacity allocated does not exceed the total available capacity (33).

6. Apparatus according to claim 5, having measuring means (25) for the usage of the resource made by each user over a predetermined period, sorting means (26) for ranking the users according to the measured usage calculation means (27) for calculating a restriction factor for each user currently requiring capacity according to that user's ranking and access control means (24) for limiting the resource available to each user currently requiring access to an extent determined by the restriction factor

7. Apparatus according to claim 5 or claim 6, controlling a plurality of modems (21, 22, 23) each associated with a respective user, and communicating with a server (20) controlling access to the internet

8. Apparatus according to claim 5 or claim 6, associated with a switching system for controlling access to an Internet service provider.

**Patentansprüche**

1. Verfahren zur Kontrolle des Zugangs (21, 22, 23) zu einer Kommunikations-Ressource (10), bei dem die Priorisierung des Zugangs, der jedem Nutzer einer Vielzahl von Nutzern (14, 15, 16, 17, 18) bereitgestellt wird, in einer zur aufgezeichneten vorherigen Nutzung dieses Nutzers inversen Beziehung steht und bei dem für jeden Nutzer des Systems die Nutzung der Ressource durch diesen Nutzer über einen vorgegebenen Zeitraum aufgezeichnet wird und das **dadurch gekennzeichnet ist, dass** die gesamte verfügbare Kapazität (B) der Ressource ermittelt wird und die gesamte Kapazität zwischen lediglich den Nutzern, die gerade Zugang anfordern, in der Weise verteilt wird, dass jedem Nutzer, der gerade Zugang anfordert, ein Anteil $b_i$ der gesamten verfügbaren Kapazität zugeteilt wird (34), wobei die jeweiligen Teile so ausgewählt werden (33), dass die gesamte zugeteilte Kapazität die gesamte verfügbare Kapazität nicht übersteigt.

2. Verfahren nach Anspruch 1, das folgende Schritte umfasst:

   - Messen der Nutzung (31) der Ressource, die von jedem Nutzer vorgenommen wird,
   - Klassifizieren der Nutzer gemäß der gemessenen Nutzung über einen vorgegebenen früheren Zeitraum (32),
   - Begrenzen der Verfügbarkeit der Ressource für jeden Nutzer, der gerade Zugang anfordert, durch Anwenden (33) eines Begrenzungsfaktors ($b_i$) bei jedem Nutzer gemäß der Klassifizierung dieses Nutzers.

3. Verfahren nach Anspruch 2, bei dem sich die Begrenzungsfaktoren ($b_i$, $b_{i+1}$), die Nutzern mit benachbarter Klassifizierung zugeteilt werden, durch einen Quotienten ($\alpha$) unterscheiden, der für sämtliche Nutzer konstant ist, die gerade Zugang anfordern.

4. Verfahren nach Anspruch 2 oder Anspruch 3, bei dem der Begrenzungsfaktor ($b_{max}$), der dem Nutzer zugeteilt wird, der gerade Kapazität anfordert und der während des vorherigen Zeitraums die geringste Nutzung vornahm, gleich Eins ist.

**5.** Vorrichtung zur Kontrolle des Zugangs zu einer Kommunikations-Ressource (10), die eine Einrichtung (24 - 27) zur Priorisierung des Zugangs zu Ressourcen, der jedem Nutzer einer Vielzahl von Nutzern (14, 15, 16, 17, 18, 19) bereitgestellt wird, in einer zur aufgezeichneten vorherigen Nutzung dieses Nutzers inversen Beziehung (32) aufweist, die eine Einrichtung (25) zur Aufzeichnung der Nutzung der Ressource, die von jedem Nutzer vorgenommen wird, während eines vorgegebenen Zeitraums aufweist,

**dadurch gekennzeichnet, dass** eine Zuteilungseinrichtung (24 - 27) eine Einrichtung zur Ermittlung der gesamten verfügbaren Kapazität (B) und eine Einrichtung (26, 27) zur Zuteilung eines Anteils $b_i$ der gesamten verfügbaren Kapazität an jeden Nutzer, der gerade Zugang anfordert (34), aufweist, wobei die Anteile so ausgewählt werden, dass die gesamte zugeteilte Kapazität die gesamte verfügbare Kapazität nicht übersteigt (33).

**6.** Vorrichtung nach Anspruch 5, die aufweist:

eine Messeinrichtung (25) für die Messung der Nutzung der Ressource, die durch jeden Nutzer vorgenommen wird, während eines vorgegebenen Zeitraums,

eine Klassifizierungseinrichtung (26) zur Klassifizierung der Nutzer gemäß der gemessenen Nutzung,

eine Berechnungseinrichtung (27) zur Berechnung eines Begrenzungsfaktors für jeden Nutzer, der gerade Kapazität anfordert, gemäß der Klassifizierung dieses Nutzers,

und

eine Zugangs-Kontrolleinrichtung (24) zur Begrenzung der für jeden Nutzer, der gerade Zugang anfordert, verfügbaren Ressource in einem Maß, das durch den Begrenzungsfaktor bestimmt wird.

**7.** Vorrichtung nach Anspruch 5 oder Anspruch 6, die eine Vielzahl von Modems (21, 22, 23) kontrolliert, die jeweils einem entsprechenden Nutzer zugeordnet sind, und die mit einem Server (20) in Verbindung steht, der den Zugang zum Internet kontrolliert.

**8.** Vorrichtung nach Anspruch 5 oder Anspruch 6, die mit einem Schaltsystem zur Kontrolle des Zugangs zu einem Internetdienstanbieter verbunden ist.

## Revendications

**1.** Procédé de commande de l'accès (21, 22, 23) à une ressource de communication (10), dans lequel la hiérarchisation de l'accès à disposition de chacun d'une pluralité d'utilisateurs (14, 15, 16, 17, 18) présente une relation inverse à l'utilisation précédemment enregistrée de cet utilisateur et dans lequel, pour chaque utilisateur du système, l'utilisation de la ressource par cet utilisateur sur une période prédéterminée est enregistrée ; et

**caractérisé en ce que** la capacité disponible totale (B) de la ressource est déterminée, et la capacité totale est partagée uniquement entre les utilisateurs nécessitant un accès à cet instant, de sorte que chaque utilisateur nécessitant un accès à cet instant se voit affecté une part $b_i$ de la capacité disponible totale (34), les parts respectives étant choisies (33) de sorte que la capacité totale affectée ne dépasse pas la capacité disponible totale.

**2.** Procédé selon la revendication 1, comprenant les étapes ci-dessous consistant à :

- mesurer l'utilisation (31) de la ressource par chaque utilisateur ;
- classer les utilisateurs en fonction de l'utilisation mesurée sur une période précédente prédéterminée (32) ;
- limiter la disponibilité de la ressource pour chaque utilisateur nécessitant un accès à cet instant, en appliquant (33) un facteur de limitation ($b_i$) à chaque utilisateur en fonction du classement de cet utilisateur.

**3.** Procédé selon la revendication 2, dans lequel les facteurs de limitation ($b_i$, $b_{i+1}$) affectés à des utilisateurs classés de manière adjacente diffèrent par un rapport ($\alpha$) qui est constant sur l'ensemble des utilisateurs nécessitant un accès à cet instant.

**4.** Procédé selon la revendication 2 ou 3, dans lequel le facteur de limitation ($b_{max}$) affecté à l'utilisateur demandant une capacité à cet instant, lequel a bénéficié de l'utilisation la plus faible au cours de la période précédente, est égal à un.

**5.** Dispositif de commande de l'accès à une ressource de communication (10) comportant un moyen (24 - 27) pour hiérarchiser l'accès à des ressources à disposition de chacun d'une pluralité d'utilisateurs (14, 15, 16, 17, 18, 19) dans une relation inverse à l'utilisation précédemment enregistrée de cet utilisateur (32), présentant un moyen (25) pour enregistrer l'utilisation de la ressource par chaque utilisateur sur une période précédente ;

**caractérisé en ce qu'**un moyen d'affectation (24 - 27) comporte un moyen pour déterminer la capacité disponible totale (B), et un moyen (26, 27) pour affecter, à chaque utilisateur nécessitant un accès à cet instant, une part $b_1$ de la capacité disponible totale (34), les parts étant choisies de sorte que le total de la capacité affectée ne dépasse pas la capacité disponible totale (33).

6. Dispositif selon la revendication 5, comportant un moyen de mesure (25) pour mesurer l'utilisation de la ressource par chaque utilisateur sur une période prédéterminée ;
un moyen de classement (26) pour classer les utilisateurs en fonction de l'utilisation mesurée ;
un moyen de calcul (27) pour calculer un facteur de limitation pour chaque utilisateur nécessitant une capacité à cet instant, selon le classement de cet utilisateur ; et
un moyen de commande d'accès (24) pour limiter la ressource à disposition de chaque utilisateur nécessitant un accès à cet instant à un degré déterminé par le facteur de limitation.

7. Dispositif selon la revendication 5 ou 6, commandant une pluralité de modems (21, 22, 23) associés chacun à un utilisateur respectif, et communiquant avec un serveur (20) commandant l'accès à Internet.

8. Dispositif selon la revendication 5 ou 6, associé à un système de commutation pour commander l'accès à un fournisseur de services Internet.

Figure 1

EP 1 668 843 B1

Figure 2

```
┌─────────────────────┐          ┌─────────────────────┐
│   Identifycurrent   │          │    Stored Usage     │
│        users        │          │     Histories       │
└─────────────────────┘          └─────────────────────┘
           │                                │
           │ 30                             │ 31
           ▼                                ▼
┌──────────────────────────────────────────────────┐
│  Rank current users in order of historic usage,   │  32
│              i = 0 to N-1                          │
└──────────────────────────────────────────────────┘          ┌──────────┐
                         │                                     │          │
                         │                                     │ B, bmax  │
                         ▼                                     │          │
┌──────────────────────────────────────────────────┐          └──────────┘
│  Calculate α such that  ...                       │  33
└──────────────────────────────────────────────────┘
                         │
                         ▼
┌──────────────────────────────────────────────────┐
│  Determine allocations ...                        │  34
└──────────────────────────────────────────────────┘
                         │
                         ▼
┌──────────────────────────────────────────────────┐
│           Instruct modem (i)                      │  35
└──────────────────────────────────────────────────┘
```

Calculate $\alpha$ such that $\sum_{i=0}^{N-1}(\alpha^i b_{max}) = B$

Determine allocations $b_i = \alpha^i b_{max}$

B, $b_{max}$

Figure 3

EP 1 668 843 B1

Figure 4

EP 1 668 843 B1

Figure 5

A

Figure 6

EP 1 668 843 B1

B

Satisfaction Index

0.5  0.4  0.3  0.2  0.1  0

0%  20%  40%  60%  80%  100%

Requested percentage of maximum capacity

Figure 7

Figure 8

Figure 9

EP 1 668 843 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1045555 A
- US 6473793 B

- US 20010033557 A

**Non-patent literature cited in the description**

- **G. HARDIN.** *Science,* 1968, vol. 162, 1243-1248